# EUROPÄISCHE PATENTANMELDUNG

(11) **EP 1 208 969 A2**
(43) Veröffentlichungstag der Anmeldung: **29.05.2002**
(21) Anmeldenummer: 01126511.3
(22) Anmeldetag: 10.11.2001
(51) Int. Cl.: B32B 27/36, F16L 11/04

(54) **Mehrschichtrohr**

(30) Priorität: 23.11.2000 DE 10057990
(71) Anmelder: Rasmussen GmbH, 63477 Maintal (DE)
(72) Erfinder: Kertesz, Janos, 65719 Hofheim (DE)
(74) Vertreter: Knoblauch, Andreas, Dr.-Ing.

(57) **Zusammenfassung**

Bei einem Mehrschichtrohr aus wenigstens drei Schichten (1, 2, 3), von denen wenigstens zwei (2, 3) auf thermoplastischem Polyester basieren, eine Schicht (2) härter als die anderen Schichten (1, 3) ist, mindestens eine (3) der anderen Schichten (1, 3) ein thermoplastisches Polyesterelastomer enthält, ist zur Verhinderung einer Versprödung des Materials des Mehrschichtrohrs dafür gesorgt, daß die radial innerste Schicht (1) wenigstens eines der Materialien Polyolefin, Polyolefincopolymer, Polyolefinterpolymer, gepfropftes Polyolefin und Polyamid enthält und mindestens eine der Schichten gegen Wärmealterung modifiziert ist.

## Beschreibung

Die Erfindung bezieht sich auf ein Mehrschichtrohr aus wenigstens drei Schichten, von denen wenigstens zwei auf thermoplastischem Polyester basieren, eine Schicht härter als die anderen Schichten ist und mindestens eine der anderen Schichten ein thermoplastisches Polyesterelastomer enthält.

Ein Mehrschichtrohr dieser Art ist aus der DE 19 831 898 A1 bekannt. Ein solches Mehrschichtrohr hat den Vorteil, daß seine Materialien in Kombination nicht nur die wesentlichen auf dem Gebiet der Kraftstoff- und Kraftstoffdampfleitungen gestellten Anforderungen, wie geringe Kraftstoffpermeation, hohe Biegsamkeit, Dehnbarkeit, Schlagzähigkeit und Chemikalienbeständigkeit in Kraftfahrzeugen erfüllen, sondern bei einer Warmformung auch eine Schmelzverbindung untereinander eingehen. Es hat sich jedoch gezeigt, daß die innerste Schicht eines solchen Mehrschichtrohrs, wenn es längere Zeit mit einem flüssigen Kraftstoff, insbesondere Kraftfahrzeug-Kraftstoff, der Wasser und/oder Alkohol enthält, bei höherer Temperatur in Berührung kommt, hydrolytisch abgebaut wird und versprödet.

Der Erfindung liegt daher die Aufgabe zugrunde, ein Mehrschichtrohr der eingangs genannten Art anzugeben, bei der die Langzeitelastizität und -flexibilität auch bei höheren Temperaturen von bis zu mindestens 90°C bei einer Beaufschlagung mit einem flüssigen Kraftstoff und Kraftstoffdämpfen erhalten bleibt.

Erfindungsgemäß ist diese Aufgabe dadurch gelöst, daß die radial innerste Schicht wenigstens eines der Materialien Polyolefin, Polyolefincopolymer, Polyolefinterpolymer, gepfropftes Polyolefin und Polyamid enthält und mindestens eine der Schichten gegen Wärmealterung modifiziert ist. Die innerste Schicht verhindert dann nach einer Berührung mit einem Kraftstoff, wie Benzin von Otto-Motoren, eine vorzeitige Versprödung des Materials derjenigen Schicht, an deren Innenseite die innerste Schicht angebracht ist. Wenn nämlich die innerste Schicht an einer Polyesterschicht angebracht ist, reagieren die Endgruppen des Polyesters und des Materials der innersten Schicht, wie Olefin oder Olefincopolymer, miteinander, so daß eine Verbindung entsteht, die die Langzeitelastizität und -flexibilität des Polyesters auch bei höheren Temperaturen von bis zu mindestens 90°C steigert.

Vorzugsweise ist das thermoplastische Polyesterelastomer ein thermoplastisches Etheresterelastomer (TEEE). Dieses Material ist weicher als das härtere Polyester und hat eine höhere Flexibilität und Elastizität. Dementsprechend hat es eine höhere Schlagfestigkeit, auch bei Temperaturen unter 0°C.

Das Polyester kann wenigstens eines der Materialien Polybutylenterephtalat (PBT), Polyethylenterephtalat (PET), Polybutylennaphtalat (PBN) und Polyethylennaphtalat (PEN) enthalten.

Auch die radial äußerste Schicht kann wenigstens eines der Materialien Polyolefin, Polyolefincopolymer, Polyolefinterpolymer, gepfropftes Polyolefin und Polyamid enthalten. Dadurch wird auch eine Versprödung der unter der äußersten Schicht liegenden Schicht vermieden, die ansonsten frei liegt und gegebenenfalls mit Kraftstoff in Berührung kommt.

Sodann sollte eine der Schichten, insbesondere die radial innerste Schicht, einen elektrisch leitfähigen Zusatz enthalten, der eine elektrostatische Aufladung des Mehrschichtrohrs verhindert.

Die Erfindung und ihre Weiterbildungen werden nachstehend anhand der beigefügten Zeichnungen bevorzugter Ausführungsbeispiele näher beschrieben. Es zeigen:

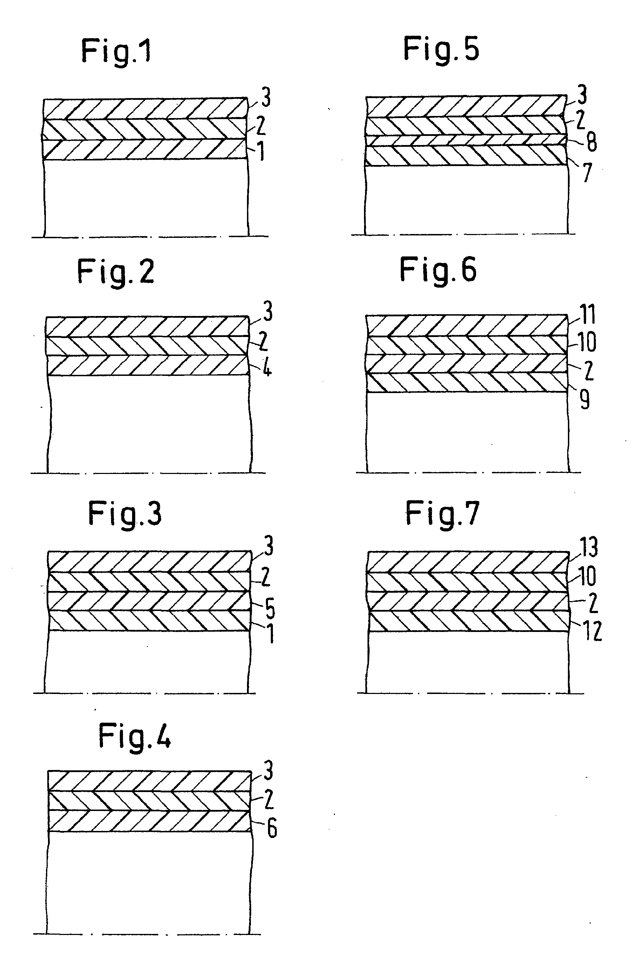

Fig. 1-7 jeweils einen Ausschnitt aus einem Axialschnitt von sieben Ausführungsbeispielen eines erfindungsgemäßen Mehrschichtrohrs.

Das Mehrschichtrohr nach Fig. 1 enthält in einer innersten Schicht 1 ein thermoplastisches Polyester als Basismaterial, das mit wenigstens einem der Materialien Polyolefin, Polyolefinterpolymer und Polyolefincopolymer vermischt ist. Eine mittlere Schicht 2 des Mehrschichtrohrs enthält ein thermoplastisches Polyester, und eine äußerste Schicht 3 enthält ein thermoplastisches Polyesterelastomer.

Die innerste Schicht 1 hat eine hohe thermische Langzeitstabilität und geringe Versprödung bei Berührung mit Kraftstoffen, wie sie für Kraftfahrzeuge verwendet werden, insbesondere Benzin, in einem Temperaturbereich von bis zu 90°C und darüber. Gleichzeitig verhindert sie eine Versprödung der mittleren Schicht 2 und der äußersten Schicht 3, da sie nicht durch die innerste Schicht 1 hindurch mit dem Kraftstoff in Berührung kommen können. Darüber hinaus erfüllt dieses Mehrschichtrohr die bei Kraftfahrzeugen gestellten Anforderungen, wie hohe Diffusionssperrfähigkeit, Biegsamkeit, Dehnbarkeit, Schlagzähigkeit, Elastizität, Chemikalienbeständigkeit und leichte Montierbarkeit.

Bei dem Mehrschichtrohr nach Fig. 2 besteht die innerste Schicht 4 aus Polyolefin und die mittlere Schicht 2 sowie die äußerste Schicht 3 jeweils aus den gleichen Materialien wie die Schichten 2 und 3 des ersten Ausführungsbeispiels.

Das Mehrschichtrohr nach Fig. 3 enthält zusätzlich zu den Schichten 1, 2 und 3 des Mehrschichtrohrs nach Fig. 1 eine weitere Schicht 5 aus einem thermoplastischen Polyesterelastomer zwischen der innersten Schicht 1 und der mittleren Schicht 2. Alternativ kann die Schicht 1 auch nur Polyolefin enthalten.

Das Mehrschichtrohr nach Fig. 4 enthält eine innerste Schicht 6 aus einer Mischung eines Polyamids als Basismaterial mit wenigstens einem der Materialien Polyolefin, Polyolefincopolymer oder Polyolefinterpolymer. Die mittlere Schicht 2 und die äußerste Schicht 3 besteht wiederum aus dem gleichen Material wie die Schichten 2 und 3 bei dem ersten Ausführungsbeispiel nach Fig. 1.

Auch bei diesem Ausführungsbeispiel ergeben sich die gleichen Vorteile wie bei den Ausführungsbeispielen nach den Fig. 1 bis 3, nur daß das Polyamid zusätzlich für eine noch höhere Permeationssperrfähigkeit und Chemikalienbeständigkeit sorgt.

Das Mehrschichtrohr nach Fig. 5 besteht wiederum aus den gleichen Schichten 2 und 3 wie die vorhergehenden Mehrschichtrohre nach den Fig. 1 bis 4. Dagegen enthält die innerste Schicht 7 entweder ein Polyamid oder die gleiche Polyamid-Mischung wie die Schicht 6 nach Fig. 4, wobei die Schicht 7 über eine Haftvermittler-Schicht 8 mit der mittleren Schicht 2 verbunden ist.

Das Mehrschichtrohr nach Fig. 6 enthält wieder dieselbe Schicht 2 wie die vorhergehenden Ausführungsbeispiele, während die innerste Schicht 9 eine Mischung aus einem thermoplastischen Polyester als Basismaterial mit wenigstens einem der Materialien Polyolefin, Polyolefincopolymer oder Polyolefinterpolymer enthält. Die mittlere Schicht 10 enthält ebenfalls ein thermoplastisches Polyester wie die Schicht 3 der vorhergehenden Beispiele. Eine zusätzliche äußerste Schicht 11 enthält eine Mischung aus einem thermoplastischen Polyester als Basismaterial mit einem der Materialien Polyolefin, Polyolefincopolymer und Polyolefinterpolymer. Die Schichten 9 und 11 schützen die mittleren Schichten 2 und 10 vor einer Versprödung durch eine Berührung mit Kraftstoffen, sei es von innen oder von außen.

Das Mehrschichtrohr nach Fig. 7 besteht ebenso wie das Mehrschichtrohr nach Fig. 6 aus vier Schichten, von denen die beiden mittleren Schichten 2 und 10 das gleiche Material wie die mittleren Schichten 2 und 10 des Mehrschichtrohrs nach Fig. 6 aufweisen, während die innerste Schicht 12 wenigstens eines der Materialien Polyolefin, Polyolefinterpolymer, Polyolefincopolymer und ein gepfropftes Polyolefin oder eine Mischung aus einem thermoplastischen Polyester mit einem Polyolefin oder eine Polyamid-Mischung wie die Schicht 7 nach Fig. 5 enthält. Auch die äußerste Schicht 13 enthält wenigstens eines der Materialien Polyolefin, Polyolefincopolymer und Polyolefinterpolymer zum Schutz der mittleren Schichten vor Versprödung.

Bei allen Ausführungsbeispielen kann wenigstens eine der Schichten, vorzugsweise die innerste Schicht, einen elektrisch leitfähigen Zusatz, wie Kohlenstoffteilchen, insbesondere Ruß- oder Graphitpulver, oder Metallteilchen, enthalten.

Ferner ist bei allen Ausführungsbeispielen das Material wenigstens einer Schicht gegen Wärmealterung modifiziert.

## Patentansprüche

1. Mehrschichtrohr aus wenigstens drei Schichten (1-13), von denen wenigstens zwei (2, 3; 2,10) auf thermoplastischem Polyester basieren, eine Schicht (2) härter als die anderen Schichten (1, 3-13) ist und mindestens eine (3) der anderen Schichten (1, 3-13) ein thermoplastisches Polyesterelastomer enthält, **dadurch gekennzeichnet, daß** die radial innerste Schicht (1; 4; 5; 6; 7; 9; 12) wenigstens eines der Materialien Polyolefin, Polyolefincopolymer, Polyolefinterpolymer, gepfropftes Polyolefin und Polyamid enthält und mindestens eine der Schichten gegen Wärmealterung modifiziert ist.

2. Mehrschichtrohr nach Anspruch 1, **dadurch gekennzeichnet, daß** das thermoplastische Polyesterelastomer ein thermoplastisches Etheresterelastomer (TEEE) ist.

3. Mehrschichtrohr nach Anspruch 1 oder 2, **dadurch gekennzeichnet, daß** das Polyester wenigstens eines der Materialien Polybutylenterephtalat (PBT), Polyethylenterephtalat (PET), Polybutylennaphtalat (PBN) und Polyethylennaphtalat (PEN) enthält.

4. Mehrschichtrohr nach einem der Ansprüche 1 bis 3, **dadurch gekennzeichnet, daß** die radial äußerste Schicht (3; 11; 13) wenigstens eines der Materialien Polyolefin, Polyolefincopolymer, Polyolefinterpolymer, gepfropftes Polyolefin und Polyamid enthält.

5. Mehrschichtrohr nach einem der Ansprüche 1 bis 4, **dadurch gekennzeichnet, daß** eine der Schichten, insbesondere die radial innerste Schicht, einen elektrisch leitfähigen Zusatz enthält.
